# EUROPÄISCHE PATENTANMELDUNG

(11) **EP 2 842 736 A1**
(43) Veröffentlichungstag der Anmeldung: **04.03.2015**
(21) Anmeldenummer: 14165827.8
(22) Anmeldetag: 24.04.2014
(51) Int. Cl.: B32B 7/12, B32B 27/08, B32B 27/18, B32B 27/34, B32B 1/08, F16L 11/04, B60T 17/04, F16L 9/133

(54) **Druckluftbremsleitung**

(30) Priorität: 16.05.2013 DE 102013209126
(71) Anmelder: Evonik Industries AG, 45128 Essen (DE)
(72) Erfinder: Beyer, Michael, 46348 Raesfeld (DE); Gahlmann, Klaus, 45770 Marl (DE); Böer, Michael, 59399 Olfen (DE); Kuhmann, Karl, 48249 Dülmen (DE)

(57) **Zusammenfassung**

Eine Druckluftbremsleitung, die folgende Schichten enthält:
I. Eine Außenschicht aus einer Formmasse, die zu mindestens 50 Gew.-% PA11 und/oder PA12 enthält, sowie
II. eine Innenschicht aus einer Formmasse, die zu mindestens 50 Gew.-% Polyamid enthält, dessen Monomereinheiten im Mittel mindestens 8 C-Atome enthalten, wobei PA11 und PA12 ausgenommen sind,
lässt sich kostengünstig herstellen; sie weist eine hohe Berstdruckfestigkeit auch bei erhöhter Temperatur, eine gute Kälteschlagzähigkeit sowie eine gute Alterungsbeständigkeit auf.

## Beschreibung

Gegenstand der Erfindung ist ein Rohr für eine Druckluftbremsleitung, das eine Außenschicht aus PA11 oder PA12, eine Innenschicht aus einem zinkchloridbeständigen Polyamid sowie gegebenenfalls eine innerste Schicht aus einem weiteren zinkchloridbeständigen Polyamid besitzt.

Druckluftbremssysteme werden häufig in Schwerlastfahrzeugen, wie z. B. in Zugmaschinen und ähnlichem, eingesetzt. In solchen Systemen wird das Bremssystem durch Druckluft aktiviert, die durch ein Rohr geleitet wird.

Druckluftbremsleitungen werden häufig aus einschichtigen PA11- oder PA12-Rohren gefertigt, da diese Polyamide eine sehr gute Beständigkeit gegenüber Umwelteinwirkungen haben; darüber hinaus gibt es mehrschichtige Lösungen. Mittels Gewebeverstärkung kann zudem ein hoher Berstdruck bei guter Flexibilität erzielt werden. In Bereichen mit geringen mechanischen und chemischen Anforderungen werden hauptsächlich Systeme auf Basis von Polyurethan eingesetzt. Hier sind insbesondere der Markt für Auflieger und der Ersatzteilmarkt zu nennen. Diese Systeme sind preisgünstiger als Systeme auf Basis von PA11 bzw. PA12, zeigen aber deutliche Nachteile in der mechanischen Festigkeit und der Chemikalienbeständigkeit.

Da Druckluftbremsleitungen teilweise im Motorraum verlegt werden, sind sie dort der Abwärme des Motors ausgesetzt. Daraus ergeben sich im Laufe der letzten Jahre zunehmende Forderungen nach höherer Wärmeformbeständigkeit sowie einem höheren Berstdruck bei hohen Temperaturen, um kurzzeitige Spitzentemperaturen besser als bei PA11- oder PA12-Monorohren abzufangen beziehungsweise das Berstdruckniveau generell bei höheren Temperaturen zu verbessern. Zudem wird zunehmend gefordert, die Dauerwärmebeständigkeit beziehungsweise Alterungsbeständigkeit deutlich zu erhöhen. Diese Anforderungen haben seit der Einführung der Euro-6-Norm und der damit verbundenen höheren Verbrennungstemperatur noch weiter an Bedeutung gewonnen.

In der US 6 670 004 wird eine Druckluftbremsleitung beschrieben, die aus einem Rohr mit der Schichtenfolge PA11 oder PA12/Haftvermittler/schlagzähmodifiziertes PA6 oder PA66 besteht; gegebenenfalls schließen sich hieran noch eine weitere Haftvermittlerschicht sowie eine abschließende Schicht aus PA11 oder PA12 an. Alternativ hierzu kann das Rohr der US 6 670 004 die Schichtenfolge PA612/schlagzähmodifiziertes PA6 oder PA66/PA612 besitzen. Ein Rohr mit entsprechendem Schichtenaufbau, bei dem aber das PA6 bzw. PA66 der Innenschicht keinen Schlagzähmodifier enthält, ist aus der US 2009/0065085 A1 bekannt. Da bei derartigen Rohren an den Verbindungsstellen die PA6- bzw. PA66-Schicht stirnseitig ungeschützt vorliegt, ist die mangelhafte Beständigkeit gegenüber Zinkchlorid bei diesen Systemen als kritisch zu betrachten. Zudem muss wegen zu geringer Haftung zwischen den PA11- bzw. PA12-Schichten und der PA6- bzw. PA66-Schicht zwingend eine Haftvermittlerschicht liegen, was den Rohraufbau aufwendiger macht. Hinzu kommt, dass PA6 und PA66 im Gleichgewichtszustand viel Wasser aufnehmen.

Die Aufgabe der vorliegenden Erfindung besteht darin, die obengenannten Nachteile zu vermeiden und insbesondere ein Rohr zur Verfügung zu stellen, das die an eine Druckluftbremsleitung gestellten Anforderungen im Hinblick auf Beständigkeit gegenüber Chemikalien, Motorölen, Zinkchlorid und Streusalzen erfüllt und das eine hohe Berstdruckfestigkeit auch bei erhöhter Temperatur, eine gute Kälteschlagzähigkeit sowie eine gute Alterungsbeständigkeit aufweist.

Diese Aufgabe wurde mit Hilfe einer Druckluftbremsleitung gelöst, die folgende Schichten enthält:
I. Eine Außenschicht aus einer Formmasse, die zu mindestens 50 Gew.-%, mindestens 55 Gew.-% bzw. mindestens 60 Gew.-% PA11 und/oder PA12 enthält,
II. eine Innenschicht aus einer Formmasse, die zu mindestens 50 Gew.-%, mindestens 55 Gew.-% bzw. mindestens 60 Gew.-% Polyamid enthält, dessen Monomereinheiten im Mittel mindestens 8, mindestens 9 bzw. mindestens 10 C-Atome enthalten, wobei PA11 und PA12 ausgenommen sind, sowie
III. gegebenenfalls eine innerste Schicht aus einer Formmasse, die zu mindestens 50 Gew.-%, mindestens 55 Gew.-% bzw. mindestens 60 Gew.-% Polyamid enthält, dessen Monomereinheiten im Mittel mindestens 8, mindestens 9 bzw. mindestens 10 C-Atome enthalten.

In einer bevorzugten Ausführungsform folgen diese Schichten direkt aufeinander; es wird hier also keine zwischengeschaltete Haftvermittlerschicht eingesetzt.

Die Außenschicht auf Basis von PA11 und/oder PA12 sorgt hierbei für eine sehr gute Zinkchloridbeständigkeit der Druckluftbremsleitung verglichen mit einer Leitung, die vollständig aus einer Formmasse gemäß Schicht II besteht. Je niedriger das Mittel der C-Atomanzahl je Monomereinheit ist, desto schlechter ist die Zinkchloridbeständigkeit. Ein Monorohr aus einer PA612-Formmasse wäre nicht erfindungsgemäß, weil PA612 eine geringere Zinkchloridbeständigkeit als PA11 oder PA12 aufweist.

Der Außendurchmesser des Rohres liegt üblicherweise im Bereich von 6 bis 20 mm und bevorzugt im Bereich von 7 bis 16 mm, während die Wanddicke 1,0 bis 2,0 mm betragen kann. Die Dicke der Schicht II beträgt hierbei 25 bis 90 %, bevorzugt 30 bis 80 % und besonders bevorzugt 35 bis 70 % der Wanddicke, während die Dicke eventuell vorhandener Haftvermittlerschichten jeweils 0,02 bis 0,2 mm, bevorzugt 0,04 bis 0,16 mm und besonders bevorzugt 0,06 bis 0,14 mm beträgt. Eventuell vorhandene Haftvermittlerschichten sind hierbei vorzugsweise dünner als die jeweils angrenzende Außenschicht bzw. innerste Schicht.

Das Polyamid der Schicht II ist herstellbar aus einer Kombination von Diamin und Dicarbonsäure, aus einer ω-Aminocarbonsäure oder dem entsprechenden Lactam. Hierbei enthält die ω-Aminocarbonsäure bzw. das Lactam mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA1014 und PA1212. Die Herstellung der Polyamide ist Stand der Technik. Selbstverständlich können auch hierauf basierende Copolyamide eingesetzt werden, wobei gegebenenfalls auch Monomere wie Caprolactam mitverwendet werden können, vorausgesetzt das Mittel der Anzahl der C-Atome hält die obengenannte Bedingung ein. In einer bevorzugten Ausführungsform ist das Polyamid der Schicht II herstellbar aus einer Kombination von Diamin und Dicarbonsäure.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%. Kommerziell verfügbare Polyetherdiamine ausgehend von Propylenglykol sind als ELASTAMIN^{®}-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet. Der Hartblock des Polyetheresteramids oder Polyetheramids wird aus einem niedermolekularen Polyamid gebildet, wie es für die Schicht II obenstehend festgelegt ist.

In einer bevorzugten Ausführungsform besitzt das Polyamid der Schicht II einen Kristallitschmelzpunkt Tₘ, gemessen mittels DSC nach ISO 11357 während des zweiten Aufheizens, von mindestens 182 °C, besonders bevorzugt von mindestens 188 °C, insbesondere bevorzugt von mindestens 195 °C und ganz besonders bevorzugt von mindestens 200 °C.

Die Formmasse der Schicht II kann neben dem obenstehend festgelegten Polyamid - wobei hier Polyetheresteramide bzw. Polyetheramide eingeschlossen sind - zusätzlich PA11 oder PA12 enthalten. In diesem Fall sind 0,01 bis 50 Gew.-%, vorzugsweise 0,1 bis 45 Gew.-% und besonders bevorzugt 1 bis 40 Gew.-% eines Polyamids enthalten, das ausgewählt ist aus PA11, PA12, einem Polyetheresteramid auf Basis von PA11 oder PA12, einem Polyetheramid auf Basis von PA11 oder PA12 sowie Mischungen hieraus.

Die Schicht III besteht in einer ersten Ausführungsform wie die Schicht I aus einer Formmasse auf Basis von PA11 und/oder PA12. In einer zweiten Ausführungsform besteht sie wie die Schicht II aus einer Formmasse auf Basis von Polyamid, dessen Monomereinheiten im Mittel mindestens 8, mindestens 9 bzw. mindestens 10 C-Atome enthalten, wobei PA11 und PA12 ausgenommen sind. In einer dritten Ausführungsform besteht die Schicht III aus einer Formmasse auf Basis einer Mischung aus Polyamid, dessen Monomereinheiten im Mittel mindestens 8, mindestens 9 bzw. mindestens 10 C-Atome enthalten, sowie PA11 und/oder PA12.

Die Formmassen der einzelnen Schichten sind in der Regel gut miteinander verträglich, so dass keine Haftvermittlerschichten nötig sind. Die Verträglichkeit kann zusätzlich verbessert werden, wenn zumindest eine der Schichten eine polyolefinische Verbindung enthält, die Säure- oder Säureanhydridgruppen besitzt, beispielweise einen der nachstehend genannten Schlagzähmodifikatoren. Damit kann die Zahl der Schichten reduziert werden, was die Herstellung weniger aufwendig macht.

Falls die Formmassen der einzelnen Schichten miteinander nicht ausreichend verträglich sind, kann eine feste Verbindung der Schichten mit Hilfe einer dazwischen liegenden Haftvermittlerschicht erzielt werden. Ein geeigneter Haftvermittler ist beispielsweise eine Formmasse auf Basis eines Polyamids, das mit den Materialien der beiden angrenzenden Schichten ausreichend verträglich ist, oder auf Basis einer Mischung der in den angrenzenden Schichten vorliegenden Polyamide. Die haftvermittelnde Wirkung kann gesteigert werden, wenn der Haftvermittler zusätzlich einen Schlagzähmodifier enthält, der, wie bei Polyamidformmassen üblich, Säureanhydridgruppen trägt, beispielsweise einen mit Maleinsäureanhydrid funktionalisierten Ethylen-Propylen-Kautschuk oder ein Ethylen-Acrylester-Maleinsäureanhydrid-Terpolymer. Weitere geeignete Haftvermittler sind mit Maleinsäureanhydrid oder Acrylsäure funktionalisierte Polyolefine, die unter den Handelsnamen ADMER^{®} oder BYNEL^{®} kommerziell erhältlich sind.

Die Formmassen der einzelnen Schichten können neben Polyamid generell weitere Komponenten enthalten, wie z. B. Schlagzähmodifikatoren, andere Thermoplaste, Weichmacher sowie andere übliche Zusatzstoffe, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

Geeignete Schlagzähmodifikatoren sind diejenigen, die üblicherweise für Polyamidformmassen Verwendung finden, wie beispielweise mit Maleinsäureanhydrid funktionalisierter Ethylen-Propylen-Kautschuk, mit Maleinsäureanhydrid funktionalisierte Styrol-Ethylen/Buten-Blockcopolymere, Acrylatkautschuk und dergleichen.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid (BBSA) oder Benzolsulfonsäure-2-ethylhexylamid infrage. Darüber hinaus kann als Weichmacher auch ein phosphorhaltiges Flammschutzmittel eingesetzt werden, beispielsweise ein Phosphat oder Phosphonat, wie z. B. Diphenylkresylphosphat.

Andere Thermoplaste, die in den Formmassen der einzelnen Schichten enthalten sein können, sind beispielsweise Polyolefine, die vorzugsweise mit Maleinsäureanhydrid oder dergleichen funktionalisiert sind oder ein nicht anspruchsgemäßes Polyamid wie beispielsweise PA6 oder PA66.

In einer bevorzugten Ausführungsform enthält die Formmasse der Außenschicht I einen kupferhaltigen Stabilisator.

In einer weiteren bevorzugten Ausführungsform enthält sowohl die Formmasse der Außenschicht I als auch die Formmasse der Innenschicht II einen kupferhaltigen Stabilisator, wobei besonders bevorzugt hier keine Schicht III enthalten ist.

In einer weiteren bevorzugten Ausführungsform enthält sowohl die Formmasse der Außenschicht I als auch die Formmasse der innersten Schicht III einen kupferhaltigen Stabilisator.

In einer weiteren Ausführungsform enthalten sowohl die Formmasse der Außenschicht I, die Formmasse der Innenschicht II als auch die Formmasse der innersten Schicht III einen kupferhaltigen Stabilisator.

Beispiele für geeignete Kupferverbindungen sind Kupfersalze wie Kupferchlorid, Kupferbromid, Kupferiodid, Kupferacetat, Kupferstearat oder Kupferacetylacetonat.

Diese Verbindungen werden vorteilhafterweise mit einem Alkali- oder Erdalkalihalogenid kombiniert, wobei hier Natriumbromid, Kaliumbromid, Natriumiodid und Kaliumiodid besonders geeignet sind. Vorteilhafterweise wird als kupferhaltiger Stabilisator eine Mischung aus CuJ und KJ eingesetzt, wobei das Verhältnis von CuJ/KJ typischerweise im Bereich von 1 : 5 bis 1 : 15 liegt.

Die Verwendung derartiger kupferhaltiger Stabilisatoren in Polyamidformmassen ist Stand der Technik; entsprechende Stabilisatorsysteme sind kommerziell erhältlich. Der kupferhaltige Stabilisator wird vorzugsweise in einer solchen Menge eingesetzt, dass die stabilisierte Polyamidformmasse einen Kupfergehalt, berechnet als Cu, im Bereich von 0,001 Gew.-% bis 0,05 Gew.-% und besonders bevorzugt im Bereich von 0,002 Gew.-% bis 0,03 Gew.-% besitzt. Ein höherer Kupfergehalt verbessert die Stabilisierung nur in untergeordnetem Ausmaß, während er sich durch die Eigenfarbe des Kupfers gegebenenfalls störend bemerkbar macht. Bei einem Kupfergehalt unterhalb von 0,001 Gew.-% ist die stabilisierende Wirkung hingegen ungenügend.

Der kupferhaltige Stabilisator kann erfindungsgemäß zusammen mit einem organischen Stabilisator eingesetzt werden. Entsprechende gemischte Stabilisatorsysteme sind kommerziell erhältlich.

Mit Hilfe des kupferhaltigen Stabilisators wird eine Langzeitstabilisierung gegen Verlust der mechanischen Eigenschaften bei hohen Dauereinsatztemperaturen erzielt sowie eine effiziente Verarbeitungsstabilisierung gegen Polymerabbau.

Die erfindungsgemäße Druckluftbremsleitung kann beispielsweise die in der Tabelle angegebenen Schichtenkonfigurationen besitzen. Hierbei werden der Einfachheit halber nur die Polyamide angegeben, auf denen die Formmassen basieren, sowie der gegebenenfalls enthaltene kupferhaltige Stabilisator.

Bei erhöhten Anforderungen an die Berstdruckfestigkeit kann das Rohr zusätzlich eine Gewebeverstärkung entsprechend dem Stand der Technik enthalten. Diese kann entweder innerhalb einer Schicht oder zwischen zwei Schichten liegen. Aus Fertigungssicht ist das Aufbringen der Gewebeschicht auf die Außenschicht des Rohrs mit anschließender Kautschukbeschichtung technisch am einfachsten zu realisieren. Als Kautschuk kommt hier entweder ein vulkanisierbarer Kautschuk in Frage oder ein thermoplastisches Elastomer wie z. B. Santopren. Die Beschichtung mit Kautschuk kann auch erfolgen, ohne dass eine Gewebeschicht aufgebracht wird.

Das erfindungsgemäße Rohr wird als Druckluftbremsleitung, etwa in Lastkraftwagen, Aufliegern, Anhängern für Lastkraftwagen oder Trailern verwendet. In Lastkraftwagen werden die Leitungen in der Regel mit einem Betriebsdruck von bis zu 12,5 bar, bei Aufliegern bzw. Trailern mit 8,5 bar betrieben.

**Tabelle 1: Beispielhafte Schichtenkonfigurationen**

| | **Außenschicht I** | **Haftvermittlerschicht** | **Innenschicht II** | **Haftvermittlerschicht** | **Innerste Schicht III** |
|---|---|---|---|---|---|
| 1 | PA 12 | - | PA612 | - | - |
| 2 | PA12, Cu-stabilisiert | - | PA612 | - | - |
| 3 | PA12, Cu-stabilisiert | - | PA612, Cu-stabilisiert | - | - |
| 4 | PA12, Cu-stabilisiert | - | PA612 | - | PA12, Cu-stabilisiert |
| 5 | PA12, Cu-stabilisiert | - | PA612, Cu-stabilisiert | - | PA12, Cu-stabilisiert |
| 6 | PA11, Cu-stabilisiert | - | PA612 | - | - |
| 7 | PA11, Cu-stabilisiert | - | PA612, Cu-stabilisiert | - | - |
| 8 | PA11, Cu-stabilisiert | - | PA612 | - | PA11, Cu-stabilisiert |
| 9 | PA11, Cu-stabilisiert | MSA-modifiziertes PP oder PA11/PA612-Blend, Cu-stabilisiert | PA612, Cu-stabilisiert | MSA-modifiziertes PP oder PA11/PA612-Blend, Cu-stabilisiert | PA11, Cu-stabilisiert |
| 10 | PA12, Cu-stabilisiert | PA12/PA610-Blend, Cu-stabilisiert | PA610, Cu-stabilisiert | | |
| 11 | PA12, Cu-stabilisiert | PA612 | PA610, Cu-stabilisiert | - | PA612, Cu-stabilisiert |
| 12 | PA12, Cu-stabilisiert | - | PA1010, Cu-stabilisiert | - | - |
| 13 | PA12, Cu-stabilisiert | - | PA1010, Cu-stabilisiert | - | PA12, Cu-stabilisiert |
| 14 | PA12, Cu-stabilisiert | - | PA1012, Cu-stabilisiert | - | PA12, Cu-stabilisiert |
| 15 | PA12, Cu-stabilisiert | - | PA1212, Cu-stabilisiert | - | PA12, Cu-stabilisiert |
| 16 | PA12, Cu-stabilisiert | - | PA1012/PA1212-Blend, Cu-stabilisiert | - | PA12, Cu-stabilisiert |
| 17 | PA12, Cu-stabilisiert | - | Blend PA1010/PA12 70 : 30, Cu-stabilisiert | - | PA12, Cu-stabilisiert |
| 18 | PA12, Cu-stabilisiert | - | PA612, Cu-stabilisiert | - | PA1012, Cu-stabilisiert |
| 19 | PA12, Cu-stabilisiert | - | PA613, Cu-stabilisiert | - | Blend PA12/PA613 40 : 60, Cu-stabilisiert |

In den nachfolgenden Beispielen wurden folgende Formmassen verwendet:
VESTAMID^{®} LX9013, eine schlagzähmodifizierte, weichmacherhaltige PA12-Extrusionsformmasse
VESTAMID^{®} X7393, eine schlagzähmodifizierte, weichmacherhaltige PA12-Extrusionsformmasse
VESTAMID^{®} DX9303, eine schlagzähmodifizierte, weichmacherhaltige PA612-Extrusionsformmasse

Auf einer Mehrschichtrohranlage wurden Dreischichtrohre entsprechend dem Beispiel 1 sowie Monorohre entsprechend dem Vergleichsbeispiel 1 mit einem Außendurchmesser von 12 mm und einer Wandstärke von 1,5 mm hergestellt, bei denen anschließend ein Bersttest gemäß DIN 53758 durchgeführt wurde. Man erkennt, dass beim erfindungsgemäßen Dreischichtrohr insbesondere bei höheren Temperaturen die Vergleichsspannung (hoop strength) erheblich verbessert ist.

Im Vergleichsbeispiel 1 wurde VESTAMID^{®} X7393 deswegen eingesetzt, weil dieses etwas weniger Schlagzähmodifier und Weichmacher als das VESTAMID^{®} LX9013 enthält und somit Monorohre erhalten wurden, die nahezu die gleiche Flexibilität wie das Dreischichtrohr des Beispiels 1 aufweisen. Auf diese Weise wurde eine Vergleichbarkeit der Ergebnisse sichergestellt. Zudem ist VESTAMID^{®} X7393 eine Standardformmasse für die Fertigung von Druckluftbremsleitungen.

**Tabelle 2: Schichtenkonfigurationen und Vergleichsspannung**

| | | Beispiel 1 | Vergleichsbeispiel 1 | Verbesserung |
|---|---|---|---|---|
| Schichtenkonfiguration | | 0,15 mm VESTAMID^{®} LX9013 | | |
| | | 1,2 mm VESTAMID^{®} DX9303 | 1,5 mm VESTAMID^{®} X7393 | |
| | | 0,15 mm VESTAMID^{®} LX9013 | | |
| Vergleichsspannung [MPa] | 23 °C | 30,8 | 30,0 | 2,7 % |
| | 120 °C | 12,4 | 9,9 | 25 % |
| | 150 °C | 7,7 | 5,1 | 51 % |

## Patentansprüche

1. Druckluftbremsleitung, die folgende Schichten enthält:
I. Eine Außenschicht aus einer Formmasse, die zu mindestens 50 Gew.-% PA11 und/oder PA12 enthält, sowie
II. eine Innenschicht aus einer Formmasse, die zu mindestens 50 Gew.-% Polyamid enthält, dessen Monomereinheiten im Mittel mindestens 8 C-Atome enthalten, wobei PA11 und PA12 ausgenommen sind.

2. Druckluftbremsleitungen gemäß Anspruch 1,
**dadurch gekennzeichnet,**
**dass** sie zusätzlich folgende Schicht enthält:
III. Eine innerste Schicht aus einer Formmasse, die zu mindestens 50 Gew.-% Polyamid enthält, dessen Monomereinheiten im Mittel mindestens 8 C-Atome enthalten.

3. Druckluftbremsleitung gemäß einem der vorhergehenden Ansprüche,
**dadurch gekennzeichnet,**
**dass** die Formmasse der Außenschicht I einen kupferhaltigen Stabilisator enthält.

4. Druckluftbremsleitung gemäß Anspruch 3,
**dadurch gekennzeichnet,**
**dass** auch die Formmasse der Innenschicht II einen kupferhaltigen Stabilisator enthält.

5. Druckluftbremsleitung gemäß einem der Ansprüche 3 und 4,
**dadurch gekennzeichnet,**
**dass** auch die Formmasse der innersten Schicht III einen kupferhaltigen Stabilisator enthält.

6. Druckluftbremsleitung gemäß einem der Ansprüche 3 bis 5,
**dadurch gekennzeichnet,**
**dass** der Kupfergehalt in der jeweiligen Formmasse 0,001 bis 0,05 Gew.-% beträgt.

7. Druckluftbremsleitung gemäß einem der vorhergehenden Ansprüche, **dadurch gekennzeichnet,**
**dass** die Schichten I und II und/oder die Schichten II und III durch eine Haftvermittlerschicht miteinander verbunden sind.
